Europäisches Patentamt

European Patent Office

Office européen des brevets

(11) Numéro de publication : **0 389 305 B1**

(12) **FASCICULE DE BREVET EUROPEEN**

(45) Date de publication du fascicule du brevet :
**07.10.92 Bulletin 92/41**

(51) Int. Cl.⁵ : **G01P 5/00**

(21) Numéro de dépôt : **90400124.5**

(22) Date de dépôt : **17.01.90**

(54) **Procédé de détermination de la vitesse du vent moyen par rapport au sol, pendant le vol d'un aéronef.**

(30) Priorité : **18.01.89 FR 8900533**

(43) Date de publication de la demande :
**26.09.90 Bulletin 90/39**

(45) Mention de la délivrance du brevet :
**07.10.92 Bulletin 92/41**

(84) Etats contractants désignés :
**BE DE FR GB IT NL SE**

(56) Documents cités :
**EP-A- 0 258 498**
**FR-A- 2 247 731**
**US-A- 4 038 870**

(56) Documents cités :
**THE RADIO AND ELECTRONIC ENGINEER,
vol. 43, no. 12, décembre 1973, pages 715-725,
Londres, GB; J. ELLIOT: "The computation
ofthe best windward and running courses for
sailing yachts"**

(73) Titulaire : **SEXTANT AVIONIQUE S.A.
5/7 rue Jeanne Braconnier Parc Tertiaire
F-92366 Meudon la Forêt Cédex (FR)**

(72) Inventeur : **Arethens, Jean Pierre
3 Rue Briffaut
F-26000 Valence (FR)**

(74) Mandataire : **Bloch, Gérard et al
2, square de l'Avenue du Bois
F-75116 Paris (FR)**

## Description

La présente invention est relative à la détermination de la vitesse du vent par rapport au sol, pendant le vol d'un aéronef.

Habituellement, on ne connaît pas, à bord d'un aéronef, par exemple un avion ou encore un hélicoptère, les trois composantes $W_N$, $W_E$ et $W_V$, mesurées dans un repère lié au sol, de la vitesse du vent par rapport au sol.

En effet, il existe des instruments de bord qui fournissent les trois composantes $S_N$, $S_E$ et $S_V$, mesurées dans un repère lié au sol, de la vitesse de l'aéronef par rapport au sol, ainsi que le module V de la vitesse de l'aéronef par rapport à la masse d'air dans laquelle il se déplace encore appelée vitesse propre de l'aéronef.

Or, la relation qui lie $\vec{W}$, vecteur vitesse du vent par rapport au sol, $\vec{S}$, vecteur vitesse de l'aéronef par rapport au sol, et $\vec{V}$, vecteur vitesse propre de l'aéronef, est :

$$\vec{S} = \vec{W} + \vec{V}$$

Il en résulte qu'on ne peut déterminer les trois composantes du vecteur $\vec{W}$ à partir seulement des trois composantes du vecteur $\vec{S}$ et du module V du vecteur $\vec{V}$.

Or la connaissance des trois composantes du vent par rapport au sol est utile à bord d'un aéronef. Notamment, lors des essais en vol, la connaissance des trois composantes du vent permet d'évaluer précisément les performances de l'avion en présence de vent. En vol normal, elle permet au pilote, ou à certains servomécanismes, d'agir sur la commande de certains organes de l'aéronef qui sont sensibles au vent, et en particulier sur les organes de tir embarqués pour corriger, en fonction du vent, les paramètres de tir afin que les objectifs soient atteints malgré l'existence de vent.

La présente invention vise donc à pallier, au moins en partie, les inconvénients qui apparaissent pour les aéronefs à bord desquels les trois composantes de la vitesse du vent par rapport au sol ne sont pas connues.

A cet effet, elle a tout d'abord pour objet un procédé de détermination des trois composantes $W_N$, $W_E$ et $W_V$, dans un repère terrestre, de la vitesse par rapport au sol du vent moyen au cours d'une période de vol d'un aéronef, en vue de la commande d'organes dudit aéronef sensibles au vent, dans lequel :

– on mesure, à chaque instant de rang i d'une suite d'instants répartis sur ladite période, la valeur $V_i$ du module de la vitesse dudit aéronef par rapport à la masse d'air dans laquelle il se déplace et les valeurs $S_{Ni}$, $S_{Ei}$ et $S_{Vi}$ des trois composantes, dans lequel repère terrestre, de la vitesse dudit aéronef par rapport au sol,

– on mémorise lesdites valeurs mesurées, et,

– on résout, par la méthode des moindres carrés, un système d'équations à trois inconnues $W_N$, $W_E$ et $W_V$, système dont l'équation courante est :

$$2(S_{Ni} - S_{NR})\, W_N + 2\,(S_{Ei} - S_{ER})\, W_E + 2\,(S_{Vi} - S_{VR})\, W_V$$
$$= S_{Ni}^2 - S_{NR}^2 + S_{Ei}^2 - S_{ER}^2 + S_{Vi}^2 - S_{VR}^2 + V_R^2 - V_i^2$$

$V_R$, $S_{NR}$, $S_{ER}$ et $S_{VR}$ étant des valeurs, mémorisées avant l'instant de rang i, dudit module et desdites trois composantes de la vitesse dudit aéronef par rapport au sol, respectivement.

On notera que le procédé de l'invention ne se propose pas de déterminer, à chaque instant de rang i, les trois composantes $W_{Ni}$, $W_{Ei}$ et $W_{Vi}$ de la vitesse du vent à partir de la seule connaissance des trois composantes $S_{Ni}$, $S_{Ei}$ et $S_{Vi}$ et du module $V_i$. Il est évident qu'une telle détermination est impossible. Toutefois, la demanderesse ayant observé que, en général, le vent reste sensiblement constant, dans le repère terrestre, au cours d'un vol, elle a mis au point le procédé de l'invention, qui permet la détermination des trois composantes du vent moyen pendant ce vol, composantes qui constituent déjà une information utile.

Dans le procédé de l'invention, et comme cela sera mieux compris dans la suite, l'insuffisance du nombre de mesures indépendantes à chaque instant de mesure, se trouve compensée par la pluralité des instants de mesure. Cette caractéristique, associée à une mise en équation judicieuse, permet, en faisant l'hypothèse que le vent reste sensiblement le même, la détermination des trois composantes inconnues.

La présente invention a également pour objet un procédé de détermination des trois composantes $W_N$, $W_E$ et $W_V$, dans un repère terrestre, de la vitesse, par rapport au sol, du vent moyen au cours d'une période de vol d'un aéronef, en vue de la commande d'organes dudit aéronef sensibles au vent, dans lequel :

– on mesure, à chaque instant de rang i d'une suite d'instants répartis sur ladite période, la valeur $V_i$ du module de la vitesse dudit aéronef par rapport à la masse d'air dans laquelle il se déplace, les valeurs $S_{Ni}$, $S_{Ei}$ et $S_{Vi}$ des trois composantes, dans ledit repère terrestre, de la vitesse dudit aéronef par rapport au sol

2

et la valeur $\theta_i$ de l'angle de tangage,
– on mémorise lesdites valeurs mesurées,
– on calcule la composante verticale $W_V$ à l'aide de la formule :

$$W_V = (1/i) \sum_{k=1}^{i} S_{Vk} - V_k \sin \theta_k$$

– et on résout, par la méthode des moindres carrés, le système d'équations dont les deux inconnues sont les deux composantes horizontales $W_N$ et $W_E$, système dont l'équation courante est :

$$2 (S_{Ni} - S_{NR}) W_N + 2 (S_{Ei} - S_{ER}) W_E =$$
$$S_{Ni}^2 - S_{NR}^2 + S_{Ei}^2 - S_{ER}^2 + V_R^2 \cos^2 \theta_R - V_i^2 \cos^2 \theta_i$$

$V_R$, $S_{NR}$, $S_{ER}$ et $\theta_R$ étant des valeurs, mémorisées avant l'instant de rang i, dudit module, desdites deux composantes horizontales de la vitesse dudit aéronef par rapport au sol, et dudit angle de tangage, respectivement.

Dans le cas où la composante verticale du vent est faible, ce procédé permet une détermination rapide.

Dans une première mise en oeuvre du procédé de l'invention, ladite suite d'instants répartis sur ladite période comprend au total n instants, n étant au moins égal à 3, lesdites valeurs mémorisées avant l'instant de rang i sont celles mesurées à tout instant de rang j inférieur à i, et on résout un système de n (n–1)/2 équations.

Cette mise en oeuvre permet d'obtenir un résultat précis car il est établi à partir d'un grand nombre d'équations.

Dans une deuxième mise en oeuvre du procédé de l'invention lesdites valeurs mémorisées avant l'instant de rang i sont des moyennes d'une pluralité de valeurs mesurées aux instants de rang j inférieur à i, et on résout, en temps réel, un système de (i–1) équations.

Cette mise en oeuvre est bien adaptée à une détermination en temps réel car le temps de calcul est relativement réduit.

La présente invention a également pour objet un dispositif pour la mise en oeuvre du procédé précédent, de détermination des trois composantes $W_N$, $W_E$ et $W_V$, dans un repère terrestre, de la vitesse par rapport au sol du vent moyen au cours d'une période de vol d'un aéronef, en vue de la commande d'organes dudit aéronef sensibles au vent, comprenant :

– des moyens pour mesurer, à chaque instant de rang i d'une suite d'instants répartis sur ladite période, la valeur $V_i$ du module de la vitesse dudit aéronef par rapport à la masse d'air dans laquelle il se déplace, et les valeurs $S_{Ni}$, $S_{Ei}$ et $S_{Vi}$ des trois composantes, dans ledit repère terrestre, de la vitesse dudit aéronef par rapport au sol,

– des moyens de mémorisation desdites valeurs mesurées, et,

– des moyens pour résoudre, par la méthode des moindres carrés, un système d'équations à trois inconnues $W_N$, $W_E$ et $W_V$, système dont l'équation courante est :

$$2 (S_{Ni} - S_{NR}) W_N + 2 (S_{Ei} - S_{ER}) W_E + 2 (S_{Vi} - S_{VR}) W_V$$
$$= S_{Ni}^2 - S_{NR}^2 + S_{Ei}^2 - S_{ER}^2 + S_{Vi}^2 - S_{VR}^2 + V_R^2 - V_i^2$$

$V_R$, $S_{NR}$, $S_{ER}$ et $S_{VR}$ étant des valeurs, mémorisées avant l'instant de rang i dans lesdits moyens de mémorisation, dudit module et desdites trois composantes de la vitesse dudit aéronef par rapport au sol, respectivement.

La présente invention sera mieux comprise à la lecture de la description suivante de la mise en oeuvre préférée du procédé de l'invention, et de la forme de réalisation préférée du dispositif de l'invention, et de quelques unes de leurs variantes, faite en se référant aux dessins annexés, sur lesquels,

– la figure 1 représente schématiquement un hélicoptère en cours de vol,

– la figure 2 représente un schéma par blocs d'un dispositif de l'invention, embarqué à bord de l'hélicoptère de la figure 1, et,

– la figure 3 représente un schéma par blocs d'une variante du dispositif de la fig. 2.

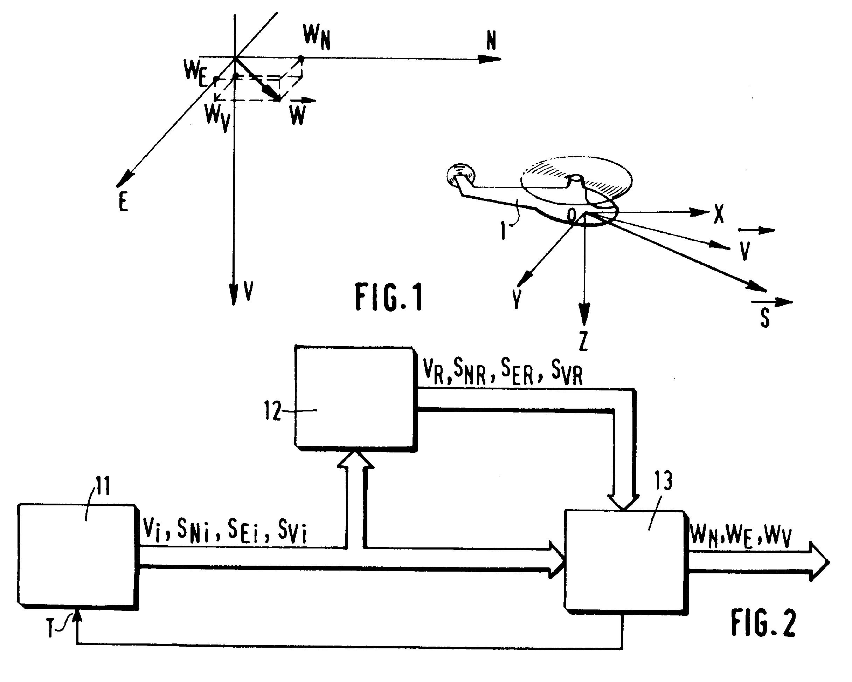

En se référant à la figure 1, un aéronef, en l'occurrence un hélicoptère 1, est représenté en cours de vol. L'hélicoptère 1 est animé, par rapport à la masse d'air dans laquelle il se déplace, d'une vitesse propre représentée par un vecteur $\overrightarrow{v}$. Il est animé, par rapport au sol, d'une vitesse représentée par un vecteur $\overrightarrow{S}$, qui est ici différente de sa vitesse propre $\overrightarrow{v}$ du fait de l'existence d'un vent qui entraîne la masse d'air dans laquelle se déplace l'hélicoptère 1 à une vitesse, par rapport au sol, représentée par un vecteur vent

$\overrightarrow{W}$.

Le procédé et le dispositif de l'invention permettent la détermination, à bord de l'hélicoptère 1, et à partir des seules informations délivrées par ses instruments de bord classiques au cours d'une période de vol, des trois composantes, dans un repère terrestre, d'un vecteur, représentant le vent moyen au cours de cette période.

Comme, en pratique, les variations du vent, autour du vent moyen, sont relativement lentes, la connaissance du vent moyen au cours d'une période de vol est suffisamment représentative du vent au cours de cette période. De plus, si cette période est celle qui vient de s'écouler, la valeur du vent moyen constitue une bonne prédiction de la valeur du vent à venir, tout au moins dans l'immédiat.

Le vent moyen ainsi déterminé est donc utilisé pour l'appréciation des performances de l'hélicoptère en présence de vent, et pour la commande des organes de l'hélicoptère qui sont sensibles au vent.

De façon connue, un repère OXYZ est lié à l'hélicoptère 1, l'axe OX étant un axe longitudinal dirigé vers l'avant de l'hélicoptère 1, l'axe OY étant un axe transversal dirigé vers la droite de son pilote, et l'axe OZ un axe dirigé vers le bas, ici confondu avec l'axe du moyeu de son rotor.

De même, le repère terrestre comprend ici un axe N dirigé vers le Nord, un axe E dirigé vers l'Est, et un axe V dirigé verticalement vers le bas.

On considère dans la suite, et dans un souci de simplification des notations, que le vent $\overrightarrow{W}$ étant constant en module et en direction dans le repère terrestre, pendant la période de vol considérée, les trois composantes du vent moyen à déterminer sont les trois composantes

$$W_N, W_E \text{ et } W_V$$

dans le repère terrestre.

Le procédé de l'invention repose d'une part sur la relation qui lie entre eux les vecteurs $\overrightarrow{S}$, $\overrightarrow{V}$ et $\overrightarrow{W}$, et d'autre part, sur le fait que les instruments de bord permettent de connaître, à tout instant, la valeur du module du vecteur $\overrightarrow{V}$ et des trois composantes du vecteur $\overrightarrow{S}$ dans le repère terrestre.

La relation qui lie les vecteurs $\overrightarrow{S}$, $\overrightarrow{V}$ et $\overrightarrow{W}$ est la relation déjà écrite :

$$\overrightarrow{S} = \overrightarrow{V} + \overrightarrow{W} \qquad\qquad (1)$$

Les instruments de bord comprennent un capteur anémobarométrique de type connu, comprenant par exemple un tube de Pitot, qui mesure à tout instant le module du vecteur $\overrightarrow{V}$ dans le repère OXYZ, le résultat de la mesure n'étant toutefois valable que pour des valeurs de ce module supérieures à un seul déterminé, de valeur ici égale à 45knots Les instruments de bord comprennent également un dispositif de mesure des trois composantes, dans le repère terrestre, du vecteur $\overrightarrow{S}$, à savoir $S_N$, $S_E$ et $S_V$. Ce dispositif est par exemple une centrale inertielle, qui comprend des accéléromètres disposés sur une plate–forme maintenue horizontale par inertie. Dans une telle centrale inertielle, les trois composantes des vitesses $S_N$, $S_E$ et $S_V$ sont obtenues par intégration des mesures effectuées par les accéléromètres. Toutefois, une telle centrale étant d'un prix de revient relativement élevé, tous les aéronefs n'en sont pas équipés. Dans un tel cas, il est cependant prévu un dispositif de mesure des trois composantes, dans le repère hélicoptère, du vecteur $\overrightarrow{S}$, à savoir $S_X$, $S_Y$ et $S_Z$. Un tel dispositif comprend par exemple un radar Doppler. Il est également prévu une centrale d'attitude qui mesure les angles de cap $\psi$, de tangage $\theta$ et de roulis $\varphi$ de l'aéronef et un calculateur qui, à partir des trois composantes $S_X$, $S_Y$, $S_Z$ et des angles $\psi$, $\theta$ et $\varphi$, calcule les trois composantes $S_N$, $S_E$ et $S_V$, du vecteur $\overrightarrow{S}$ dans le repère terrestre, à partir d'équations de passage du repère hélicoptère au repère terrestre bien connues de l'homme du métier. On peut donc dire que, dans tous les cas, les instruments de bord mesurent les trois composantes $S_N$, $S_E$ et $S_V$.

Si l'on considère une suite de n instants $t_1$, $t_2$,..., $t_i$,..., $t_n$ de mesure répartis sur la période de vol considérée, on dispose, pour chaque instant $t_i$, de rang i, de quatre grandeurs scalaires qui sont :

– le module $V_i$ du vecteur $\overrightarrow{V}$, et,

– les trois composantes $S_{Ni}$, $S_{Ei}$ et $S_{Vi}$ du vecteur $\overrightarrow{S}$ dans le repère terrestre.

Or la relation (1) peut s'écrire :

$$\overrightarrow{S} - \overrightarrow{W} = \overrightarrow{V} \qquad (2)$$

La relation (2), écrite en module et à l'instant $t_i$, fournit l'équation :

$$(S_{Ni} - W_N)^2 + (S_{Ei} - W_E)^2 + (S_{Vi} - W_V)^2 = V_i^2 \quad (3)$$

L'équation (3) traduit le fait que, dans le repère terrestre, l'extrémité du vecteur $\overrightarrow{W}$ se trouve sur une sphère $SP_i$ centrée au point de coordonnées ($S_{Ni}$, $S_{Ei}$, et $S_{Vi}$) et de rayon $V_i$.

On dispose donc de n équations telles que la relation (3), chacune d'entre elles étant relative à un instant de rang i différent.

Si l'on soustrait membre à membre l'équation relative à l'instant $t_i$ de celle relative à l'instant $t_j$, on obtient l'équation :

$$(S_{Nj} - W_N)^2 - (S_{Ni} - W_N)^2$$
$$+ (S_{Ej} - W_E)^2 - (S_{Ei} - W_E)^2$$
$$+ (S_{Vj} - W_V)^2 - (S_{Vi} - W_V)^2$$
$$= V_j^2 - V_i^2 \quad (4)$$

qui devient

$$2(S_{Ni} - S_{Nj}) W_N + 2 (S_{Ei} - S_{Ej}) W_E + 2 (S_{Vi} - S_{Vj}) W_V$$
$$= S_{Ni}^2 - S_{Nj}^2 + S_{Ei}^2 - S_{Ej}^2 + S_{Vi}^2 - S_{Vj}^2 + V_j^2 - V_i^2 \quad (5)$$

L'équation (5) traduit le fait que, dans le repère terrestre, l'extrémité du vecteur $\overrightarrow{W}$ se trouve sur le plan radical de la sphère $SP_i$ et de la sphère $SP_j$, c'est–à–dire le plan qui contient le cercle selon lequel ces deux sphères se coupent, lorsque celles–ci ont au moins un point commun, ce qui est, en principe, le cas ici.

En écrivant toutes les équations telles que (5) pour tous les couples i, j, i étant différent de j, on obtient un système de n (n–1)/2 équations à trois inconnues $W_N$, $W_E$ et $W_V$.

On résout alors ce système par la méthode des moindres carrés pour déterminer les trois inconnues $W_N$, $W_E$ et $W_V$, qui sont les trois composantes du vent moyen à déterminer .

Dans le procédé de l'invention, on comprend que c'est le fait de résoudre le système de n (n–1)/2 équations par régression linéaire qui introduit un moyennage sur les composantes $W_N$, $W_E$ et $W_V$.

En effet, si l'on se place dans une situation théorique idéale, où le vecteur $\overrightarrow{W}$ est rigoureusement constant et où les mesures de $V_i$, $S_{Ni}$, $S_{Ei}$ et $S_{Vi}$ sont exactes, il suffit de trois équations telles que l'équation (5) pour déterminer $W_N$, $W_E$ et $W_N$. Dans ce cas, les trois sphères définies par ces trois équations ont un point commun et un seul dont les trois coordonnées sont les trois composantes recherchées. Dans ce cas idéal, la multiplication des instants de mesure permet de former d'autres groupes de trois sphères dont le point commun est toujours le même.

Toutefois, dans les cas pratiques où le vecteur $\overrightarrow{W}$ varie légèrement entre deux instants de mesure et où les mesures de $V_i$, $S_{Ni}$, $S_{Ei}$ et $S_{Vi}$ sont entachées d'erreurs, on comprend que les n sphères d'équation (5) n'ont plus, à proprement parler, un point commun et que ce point commun éclate, en fait, en un nuage de points, nuage de volume plus ou moins large à l'intérieur duquel passent toutes les sphères.

Dans ce cas, le procédé de l'invention apporte une solution au problème posé par la détermination des coordonnées moyennes de ce volume. De plus, le passage par les équations (5) des plans radicaux, et l'application de la méthode des moindres carrés au système d'équations (5) conduit à un résultat qui se révèle tout à fait satisfaisant, à l'égard de la précision du résultat comme à l'égard du temps de calcul.

Tel qu'il vient d'être exposé, le procédé de l'invention se prête bien à un traitement en temps différé. Dans ce cas, pendant la période de vol considérée, on se contente d'effectuer les mesures pour les n instants de la suite, répartis au mieux sur cette période. Lorsque la période s'est écoulée et que les mesures ont été mémorisées, on résout le système de n(n–1)/2 équations pour connaître les composantes du vent moyen pendant la période de mesure.

Il est également possible d'effectuer le traitement en temps réel et de façon continue, en résolvant, entre l'instant $t_i$ et l'instant $t_{i+1}$, le système de n(n–1)/2 équations établi à partir des mesures aux instants $t_{i-n}$, $t_{i-n+1}$,..., $t_i$.

Dans le cas du traitement en temps réel, on peut toutefois réduire la taille du système à résoudre, et donc gagner en temps de calcul, en formant, à l'aide des mesures effectuées à l'instant $t_i$, l'équation suivante :

$$2(S_{Ni} - S_{NR}) W_N + 2 (S_{Ei} - S_{ER}) W_E + 2 (S_{Vi} - S_{VR}) W_V$$
$$= S_{Ni}^2 - S_{NR}^2 + S_{Ei}^2 - S_{ER}^2 + S_{Vi}^2 - S_{VR}^2 + V_R^2 - V_i^2 \quad (5')$$

et en utilisant cette équation dès qu'elle est disponible pour effectuer un pas recursif dans la méthode des moindres carrés.

L'équation (5') est identique à l'équation (5) à ceci près que les valeurs $S_{Nj}$, $S_{Ej}$, $S_{Vj}$ et $V_j$ y sont remplacées par des valeurs $S_{NR}$, $S_{ER}$, $S_{VR}$ et $V_R$, respectivement, qui sont les moyennes de la pluralité de valeurs mesurées aux instants de rang j inférieur à i, selon les formules :

$$S_{NR} = 1/(i-1) \sum_{k=1}^{i-1} S_{Nk}$$

$$S_{ER} = 1/(i-1) \sum_{k=1}^{i-1} S_{Ek}$$

$$(6)$$

$$S_{VR} = 1/(i-1) \sum_{k=1}^{i-1} S_{Vk}$$

$$V_R = 1/(i-1) \sum_{k=1}^{i-1} V_k$$

Dans ce cas, le système d'équation à résoudre par la méthode des moindres carrés comprend, à l'instant $t_i$, seulement (i−1) équations, et, de plus, il est résolu en temps réel, dans la mesure où chaque instant de mesure tel que $t_i$ donne naissance à une seule équation supplémentaire qui est aussitôt prise en compte pour la résolution du système.

Dans le cas où le procédé de l'invention est utilisé en temps réel, il est bon de prévoir des initialisations à intervalles réguliers, de façon à ce que les composantes du vent déterminées à un instant donné ne dépendent pas de ce qu'elles étaient à un instant antérieur trop éloigné de cet instant. Par exemple, on peut réinitialiser le processus toutes les minutes. Comme, pour les instants qui suivent le réinitialisation, le nombre d'équations du système résolu est faible, les valeurs déterminées des composantes du vent sont peu sûres. Dans ce cas, on peut prévoir de délivrer comme résultat une moyenne pondérée du résultat déterminé juste avant l'initialisation, et du résultat déterminé à l'instant présent, le coefficient de pondération étant variable au cours du temps, pour donner de plus en plus de poids au résultat de l'instant présent. En effet, celui-ci est d'autant plus sûr que le nombre d'équations, telles que (5) ou (5'), prises en compte est grand, c'est-à-dire que l'on s'éloigne de l'instant d'initialisation précédent.

Dans le cas particulier où la composante du vent vertical est faible, on peut simplifier le procédé de l'invention, afin de gagner du temps de calcul pour la résolution du système d'équations. En effet, si le vent vertical est faible, on peut admettre que la composante $V_{Vi}$ selon l'axe vertical du repère terrestre, de la vitesse propre $\overrightarrow{V}$ de l'hélicoptère vaut :

$$V_{Vi} = V_i \sin \theta_i \quad (7)$$

expression dans laquelle $\theta_i$ est l'angle de tangage mesuré au même instant $t_i$ que le module $V_i$ de la vitesse propre $\overrightarrow{V}$.

La projection de la relation (2) sur l'axe vertical du repère terrestre fournit l'équation :

$$S_{Vi} - W_{Vi} = V_i \sin \theta_i \quad (8)$$

ce qui permet immédiatement la détermination de $W_{Vi}$ et de la composante $W_V$ comme moyenne de $W_{Vi}$, selon la relation

EP 0 389 305 B1

$$W_V = (1/i) \sum_{k=1}^{i} S_{Vk} - V_k \sin\theta_k \qquad (9)$$

La projection de la relation (2) sur le plan horizontal du repère terrestre fournit l'équation :

$$(S_{Ni} - W_N)^2 + (S_{Ei} - W_E)^2 = V_i^2 \cos^2\theta_i \qquad (10)$$

L'équation (10) traduit le fait que, dans le plan horizontal, l'extrémité de la projection du vecteur $\overrightarrow{W}$ se trouve sur un cercle $C_i$ centré au point de coordonnées $(S_{Ni}, S_{Ei})$ et de rayon $V_i \cos\theta_i$.

On dispose donc de n équations telles que la relation (10). Si on soustrait membre à membre l'équation relative à l'instant $t_i$ de celle relative à l'instant $t_j$, on obtient l'équation :

$$(S_{Nj} - W_N)^2 - (S_{Ni} - W_N)^2$$
$$+ (S_{Ej} - W_E)^2 - (S_{Ei} - W_E)^2$$
$$= V_j^2 \cos^2\theta_j - V_i^2 \cos^2\theta_i \qquad (11)$$

qui devient

$$2(S_{Ni} - S_{Nj}) W_N + 2 (S_{Ei} - S_{Ej}) W_E$$
$$= S_{Ni}^2 - S_{Nj}^2 + S_{Ei}^2 - S_{Ej}^2 + V_j^2 \cos^2\theta_j - V_i^2 \cos^2\theta_i \qquad (12)$$

L'équation (12) traduit le fait que, dans le plan horizontal, la projection de l'extrémité du vecteur $\overrightarrow{W}$ se trouve sur l'axe radical du cercle, $C_i$ et du cercle $C_j$, c'est-à-dire de la droite qui contient les deux points d'intersection de ces deux cercles.

On obtient alors, comme précédemment, un système de n(n−1)/2 équations, mais à deux inconnues $W_N$ et $W_E$ seulement, système que l'on résout par la méthode des moindres carrés.

Naturellement, et comme cela a déjà été expliqué à propos du système d'équation (5), il est possible de résoudre, en temps réel, un système dont l'équation courante est :

$$2(S_{Ni} - S_{NR}) W_N + 2 (S_{Ei} - S_{ER}) W_E =$$
$$S_{Ni}^2 - S_{NR}^2 + S_{Ei}^2 - S_{ER}^2 + V_R^2 \cos^2\theta_R - V_i^2 \cos^2\theta_i \qquad (12')$$

$S_{NR}$, $S_{ER}$ et $V_R$ étant définis par les équations (6), et $\theta_R$ valant :

$$\theta_R = 1/(i-1) \sum_{k=1}^{i-1} \theta_k \qquad (13)$$

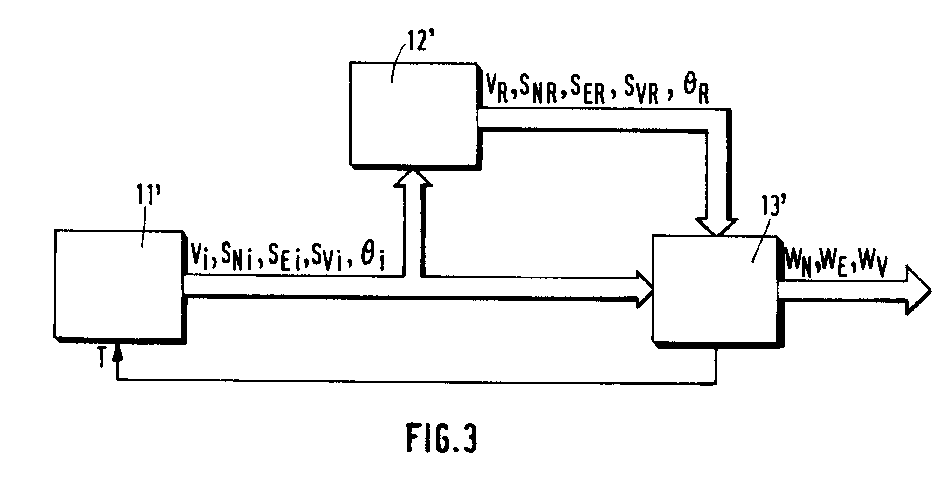

Des exemples de dispositifs mettant en oeuvre le procédé décrit ci-dessus, ainsi que sa variante, sont décrits maintenant en référence aux figures 2 et 3.

Sur la figure 2, le bloc 11 comprend le dispositif de mesure du module de la vitesse propre de l'hélicoptère 1, ainsi que le dispositif de mesure des trois composantes, par rapport au sol, de la vitesse par rapport au sol. Il est pourvu d'une sortie numérique et d'une entrée binaire. L'entrée binaire reçoit un signal T de synchronisation, qui définit l'instant de mesure, ici chaque instant $t_i$, et la sortie numérique délivre, sous forme numérique, les valeurs mesurées $V_i$, $S_{Ni}$, $S_{Ei}$ et $S_{Vi}$.

Le bloc 12 comprend ici une mémoire, et, le cas échéant, un circuit de calcul. Le bloc 12 est pourvu d'une entrée numérique qui reçoit les valeurs numériques $V_i$, $S_{Ni}$, $S_{Ei}$ et $S_{Vi}$ et d'une sortie numérique qui délivre les valeurs $V_R$, $S_{NR}$, $S_{ER}$ et $S_{VR}$. Ces dernières valeurs sont soit l'ensemble des valeurs mesurées à tout instant de rang j inférieur à 1, dans le cas du traitement en temps différé par exemple, soit les moyennes définies par les équations (6) dans le cas du traitement en temps réel, par exemple. Le circuit de calcul du bloc 12 effectue alors le calcul de moyennes.

Enfin, le bloc 13 est un calculateur, par exemple à microprocesseur, pourvu d'une sortie délivrant le signal T, d'une entrée numérique recevant les valeurs $V_i$, $S_{Ni}$, $S_{Ei}$ et $S_{Vi}$, d'une entrée numérique recevant les valeurs $V_R$, $S_{NR}$, $S_{ER}$ et $S_{VR}$, et d'une sortie délivrant les valeurs $W_E$, $W_N$ et $W_V$ des trois composantes du vent moyen. Le calculateur 13 est agencé pour résoudre, par la méthode des moindres carrés, le système dont l'équation courante est l'équation (5').

Sur la figure 3, les blocs 11', 12' et 13' correspondent respectivement aux blocs 11, 12 et 13 de la figure 2, mais ils sont prévus pour la mise en oeuvre de la variante du procédé valable lorsque la composante verticale

7

du vent est faible.

Le bloc 11′ délivre donc, en plus des valeurs délivrées par le bloc 11, la valeur $\theta_i$ de l'angle de tangage.

Le bloc 12′ mémorise cette valeur et délivre la valeur $\theta_R$ correspondante, et le calculateur 13′ est agencé pour calculer la composante $W_V$ selon la formule (9) et pour résoudre, par la méthode des moindres carrés, le système dont l'équation courante est l'équation (12′).

Naturellement, quelle que soit la variante mise en oeuvre, la détermination des composantes du vent moyen sera d'autant plus précise que les attitudes de l'aéronef et sa vitesse propre différent d'un instant à l'autre.

En effet chaque équation telle que (5′) ou (12′) étant obtenue par soustraction membre à membre de deux équations, il importe que les coefficients de ces deux équations ne soient pas trop proches, afin que la précision sur leur différence reste satisfaisante.

De même, la durée de la période de mesure peut être ajustée en fonction de la rapidité des variations du vent, de même que le nombre n et la répartition des points, notamment pour tenir compte des impératifs précédents.

A propos du nombre d'instants de mesure, par exemple le nombre n, on notera que celui-ci doit, évidemment, être au moins égal à 3, afin que le système de $n(n-1)/2$ équations ait au moins trois équations.

Lorsque, comme cela a été décrit, le tube de Pitot n'effectue de mesures valables que si le module de la vitesse air est supérieure à 45 knots, le pilote de l'hélicoptère ne possède pas d'informations sur la vitesse air aux basses vitesses. Ceci peut être gênant pour un bon pilotage. Dans ce cas, l'invention permet une estimation de la vitesse air, obtenue en composant les dernières composantes valablement déterminées de la vitesse du vent aux composantes, en permanence valablement mesurées, de la vitesse de l'hélicoptère par rapport au sol, conformément à la relation 2. Par "dernières composantes valablement déterminées", il faut entendre ici celles qui ont été déterminées juste avant que le module de la vitesse air ne devienne inférieur au seuil de 45 knots. On obtient ainsi une estimation de la vitesse air qui supplée aux carences du tube de Pitot. Naturellement, plus courte est la durée de la période de faible vitesse et plus lentes sont les variations réelles du vent, meilleure est l'estimation.

## Revendications

1. Procédé de détermination des trois composantes $W_N$, $W_E$ et $W_V$, dans un repère terrestre, de la vitesse par rapport au sol du vent moyen au cours d'une période de vol d'un aéronef, en vue de la commande d'organes dudit aéronef sensibles au vent, dans lequel :

– on mesure, à chaque instant de rang i d'une suite d'instants répartis sur ladite période, la valeur $V_i$ du module de la vitesse dudit aéronef par rapport à la masse d'air dans laquelle il se déplace et les valeurs $S_{Ni}$, $S_{Ei}$ et $S_{Vi}$ des trois composantes, dans ledit repère terrestre de la vitesse dudit aéronef par rapport au sol,

– on mémorise lesdites valeurs mesurées, et,

– on résout, par la méthode des moindres carrés, un système d'équations à trois inconnues $W_N$, $W_E$ et $W_V$, système dont l'équation courante est :

$$2(S_{Ni} - S_{NR}) W_N + 2(S_{Ei} - S_{ER}) W_E + 2(S_{Vi} - S_{VR}) W_V$$
$$= S_{Ni}^2 - S_{NR}^2 + S_{Ei}^2 - S_{ER}^2 + S_{Vi}^2 - S_{VR}^2 + V_R^2 - V_i^2$$

$V_R$, $S_{NR}$, $S_{ER}$ et $S_{VR}$ étant des valeurs, mémorisées avant l'instant de rang i, dudit module et desdites trois composantes de la vitesse dudit aéronef par rapport au sol, respectivement.

2. Procédé de détermination des trois composantes $W_N$, $W_E$ et $W_V$, dans un repère terrestre, de la vitesse, par rapport au sol, du vent moyen au cours d'une période de vol d'un aéronef, en vue de la commande d'organes dudit aéronef sensibles au vent, dans lequel :

– on mesure, à chaque instant de rang i d'une suite d'instants répartis sur ladite période, la valeur $V_i$ du module de la vitesse dudit aéronef par rapport à la masse d'air dans laquelle il se déplace, les valeurs $S_{Ni}$, $S_{Ei}$ et $S_{Vi}$ des trois composantes, dans ledit repère terrestre, de la vitesse dudit aéronef par rapport au sol et la valeur $\theta_i$ de l'angle de tangage,

– on mémorise lesdites valeurs mesurées,

– on calcule la composante verticale $W_V$ à l'aide de la formule :

$$W_V = (1/i) \sum_{k=1}^{i} S_{Vk} - V_k \sin \theta_k$$

– et on résout, par la méthode des moindres carrés, le système d'équations dont les deux inconnues sont les deux composantes horizontales $W_N$ et $W_E$, système dont l'équation courante est :

$$2 (S_{Ni} - S_{NR}) W_N + 2 (S_{Ei} - S_{ER}) W_E =$$
$$S_{Ni}^2 - S_{NR}^2 + S_{Ei}^2 - S_{ER}^2 + V_R^2 \cos^2 \theta_R - V_i^2 \cos^2 \theta_i$$

$V_R$, $S_{NR}$, $S_{ER}$ et $\theta_R$ étant des valeurs, mémorisées avant l'instant de rang i, dudit module, desdites deux composantes horizontales de la vitesse dudit aéronef par rapport au sol, et dudit angle de tangage, respectivement.

3. Procédé selon l'une des revendications 1 ou 2, dans lequel ladite suite d'instants répartis sur ladite période comprend au total n instants, n étant au moins égal à 3, lesdites valeurs mémorisées avant l'instant de rang i sont celles mesurées à tout instant de rang j inférieur à i et on résout un système de n(n−1)/2 équations.

4. Procédé selon l'une des revendications 1 ou 2, dans lequel lesdites valeurs mémorisées avant l'instant de rang i sont des moyennes d'une pluralité de valeurs mesurées aux instants de rang j inférieur à i, et on résout, en temps réel, un système de (i−1) équations.

5. Dispositif pour la mise en oeuvre du procédé selon la revendication 1 de détermination des trois composantes $W_N$, $W_E$ et $W_V$, dans un repère terrestre, de la vitesse par rapport au sol du vent au cours d'une période de vol d'un aéronef, en vue de la commande d'organes dudit aéronef sensibles au vent, comprenant :

– des moyens (11, 13) pour mesurer, à chaque instant de rang i d'une suite d'instants répartis sur ladite période, la valeur $V_i$ du module de la vitesse dudit aéronef par rapport à la masse d'air dans laquelle il se déplace, et les valeurs $S_{Ni}$, $S_{Ei}$ et $S_{Vi}$ des trois composantes, dans ledit repère terrestre, de la vitesse dudit aéronef par rapport au sol,

– des moyens de mémorisation (12) desdites valeurs mesurées, et,

– des moyens (13) pour résoudre, par la méthode des moindres carrés, un système d'équations à trois inconnues $W_N$, $W_E$ et $W_V$, système dont l'équation courante est :

$$2(S_{Ni} - S_{NR}) W_N + 2 (S_{Ei} - S_{ER}) W_E + 2 (S_{Vi} - S_{VR}) W_V$$
$$= S_{Ni}^2 - S_{NR}^2 + S_{Ei}^2 - S_{ER}^2 + S_{Vi}^2 - S_{VR}^2 + V_R^2 - V_i^2$$

$V_R$, $S_{NR}$, $S_{ER}$ et $S_{VR}$ étant des valeurs, mémorisées avant l'instant de rang i dans lesdits moyens de mémorisation (12), dudit module et desdites trois composantes de la vitesse dudit aéronef par rapport au sol, respectivement.

6.– Dispositif pour la mise en oeuvre du procédé selon la revendication 2 de détermination des trois composantes $W_N$, $W_E$ et $W_V$, dans un repère terrestre, de la vitesse par rapport au sol du vent moyen au cours d'une période de vol d'un aéronef, en vue de la commande d'organes dudit aéronef sensibles au vent, comprenant :

– des moyens (11′, 13′) pour mesurer, à chaque instant de rang i d'une suite d'instants répartis sur ladite période, la valeur $V_i$ du module de la vitesse dudit aéronef par rapport à la masse d'air dans laquelle il se déplace, les valeurs $S_{Ni}$, $S_{Ei}$ et $S_{Vi}$ des trois composantes, dans ledit repère terrestre, de la vitesse dudit aéronef par rapport au sol, et la valeur $\theta_i$ de l'angle de tangage,

– des moyens de mémorisation (12′) desdites valeurs mesurées,

– des moyens (13′) de calcul de la composante verticale $W_V$ à l'aide de la formule :

$$W_V = (1/i) \sum_{k=1}^{i} S_{Vk} - V_k \sin \theta_k$$

– et des moyens (13′) pour résoudre, par la méthode des moindres carrés, le système d'équations dont les deux inconnues sont les deux composantes horizontales $W_N$ et $W_E$, système dont l'équation courante est :

$$2(S_{Ni} - S_{NR}) W_N + 2 (S_{Ei} - S_{ER}) W_E =$$
$$S_{Ni}^2 - S_{NR}^2 + S_{Ei}^2 - S_{ER}^2 + V_R^2 \cos^2 \theta_R - V_i^2 \cos^2 \theta_i$$

$V_R$, $S_{NR}$, $S_{ER}$ et $\theta_R$ étant des valeurs, mémorisées avant l'instant de rang i dans lesdits moyens de mémorisation (12′, 13′), dudit module, desdites trois composantes de la vitesse dudit aéronef par rapport au sol, et dudit angle de tangage, respectivement.

7 – Dispositif selon l'une des revendications 5 ou 6, dans lequel ladite suite d'instants répartis sur ladite période comprend au total n instants, n étant au moins égal à 3, lesdits moyens de mémorisation (12, 13; 12′, 13′) mémorisent les valeurs mesurées à tout instant de rang j inférieur à i, et lesdits moyens (13, 13′) de résolution résolvent un système de n(n–1)/2 équations.

8 – Dispositif selon l'une des revendications 5 ou 6, dans lequel lesdits moyens de mémorisation (12, 13; 12′, 13′) mémorisent des moyennes d'une pluralité de valeurs mesurées aux instants de rang j inférieur à i, et lesdits moyens de résolution résolvent, en temps réel, un système de (i–1) équations.

9 – Dispositif selon l'une des revendications 5 à 8, dans lequel lesdits moyens (11, 13) de mesure comprennent un tube de Pitot qui ne délivre un résultat valable pour ladite valeur Vi du module de la vitesse dudit aéronef par rapport à l'air que lorsque ledit module est supérieur à un seuil déterminé, et dans lequel, lorsque ledit module devient inférieur audit seuil déterminé, les dernières composantes valablement déterminées $W_N$, $W_E$ et $W_V$ de la vitesse du vent sont mémorisées en vue d'être composées auxdites valeurs mesurées $S_{Ni}$, $S_{Ei}$ et $S_{Vi}$ des trois composantes de la vitesse dudit aéronef par rapport au sol pour évaluer la vitesse dudit aéronef par rapport à l'air.


## Patentansprüche

1. Verfahren zur Bestimmung der drei Komponenten $W_N$, $W_E$ und $W_V$ der mittleren Windgeschwindigkeit relativ zum Boden in einem terrestrischen Bezugssystem im Verlauf einer Flugperiode eines Luftfahrzeugs zum Zwecke der Steuerung windempfindlicher Organe dieses Luftfahrzeugs, bei welchem Verfahren:
   – man zu jedem Zeitpunkt i einer Folge von über diese Zeitperiode verteilten Zeitpunkten den Wert $V_i$ des Absolutbetrags der Geschwindigkeit des Luftfahrzeugs relativ zur Luftmasse, in der es sich fortbewegt, und – in dem terrestrischen Bezugssystem – die Werte $S_{Ni}$, $S_{Ei}$ und $S_{Vi}$ der drei Komponenten der Geschwindigkeit des Luftfahrzeugs relativ zum Boden mißt,
   – man diese gemessenen Werte speichert und
   – man mittels der Methode der kleinsten Fehlerquadrate ein Gleichungssystem mit drei unbekannten $W_N$, $W_E$ und $W_V$ löst, ein System, dessen laufende Gleichung:

$$2 (S_{Ni} - S_{NR}) W_N + 2 (S_{Ei} - S_{ER}) W_E + 2 (S_{Vi} - S_{VR}) W_V$$
$$= S_{Ni}^2 - S_{NR}^2 + S_{Ei}^2 - S_{ER}^2 + S_{Vi}^2 - S_{VR}^2 + V_R^2 - V_i^2$$

ist, wobei $V_R$, $S_{NR}$, $S_{ER}$ und $S_{VR}$ vor dem Zeitpunkt i gespeicherte Werte des besagten Absolutbetrags bzw. der drei Komponenten der Geschwindigkeit des Luftfahrzeugs relativ zum Boden sind.

2. Verfahren zur Bestimmung der drei Komponenten $W_N$, $W_E$ und $W_V$ der mittleren Windgeschwindigkeit relativ zum Boden in einem terrestrischen Bezugssystem im Verlauf einer Flugperiode eines Luftfahrzeugs zum Zwecke der Steuerung windempfindlicher Organe dieses Luftfahrzeugs, bei welchem Verfahren:
   – man zu jedem Zeitpunkt i einer Folge von über diese Zeitperiode verteilten Zeitpunkten den Wert $V_i$ des Absolutbetrags der Geschwindigkeit des Luftfahrzeugs relativ zur Luftmasse, in der es sich fortbewegt, in dem terrestrischen Bezugssystem die Werte $S_{Ni}$, $S_{Ei}$ und $S_{Vi}$ der drei Komponenten der Geschwindigkeit des Luftfahrzeugs relativ zum Boden und den Wert $\vartheta_i$ des Längsneigungswinkels mißt,
   – man diese gemessenen Werte speichert,
   – man die vertikale Komponente $W_V$ mit Hilfe der Formel:

$$W_V = (1/i) \sum_{k=1}^{i} S_{Vk} - V_k \sin \vartheta_k$$

berechnet,
   – und man mittels der Methode der kleinsten Fehlerquadrate das Gleichungssystem löst, dessen zwei Unbekannte die zwei horizontalen Komponenten $W_N$ und $W_E$ sind, ein System, dessen laufende Gleichung:

$$2 (S_{Ni} - S_{NR}) W_N + 2 (S_{Ei} - S_{ER}) W_E =$$
$$S_{Ni}^2 - S_{NR}^2 + S_{Ei}^2 - S_{ER}^2 + V_R^2 \cos^2 \vartheta_R - V_i^2 \cos^2 \vartheta_i$$

ist, wobei $V_R$, $S_{NR}$, $S_{ER}$ und $\vartheta_R$ vor dem Zeitpunkt i gespeicherte Werte des besagten Absolutbetrags, der zwei horizontalen Komponenten der Geschwindigkeit des Luftfahrzeugs relativ zum Boden bzw.

des Längsneigungswinkels sind.

3. Verfahren nach einem der Ansprüche 1 oder 2, bei dem die Folge von über die besagte Zeitperiode verteilten Zeitpunkten insgesamt n Zeitpunkte umfaßt, wobei n mindestens 3 ist, die vor dem Zeitpunkt i gespeicherten Werte jene sind, die zu jedem Zeitpunkt j (j kleiner als i) gemessen wurden, und man ein System von $n(n-1)/2$ Gleichungen löst.

4. Verfahren nach einem der Ansprüche 1 oder 2, bei dem die vor dem Zeitpunkt i gespeicherten Werte Mittelwerte einer Vielzahl von Werten sind, welche zu den Zeitpunkten j (j kleiner als i) gemessen wurden, und man in Echtzeit ein System von $(i-1)$ Gleichungen löst.

5. Vorrichtung zur Durchführung des Verfahrens nach Anspruch 1, ein Verfahren zur Bestimmung der drei Komponenten $W_N$, $W_E$ und $W_V$ der Windgeschwindigkeit relativ zum Boden in einem terrestrischen Bezugssystem im Verlauf einer Flugperiode eines Luftfahrzeugs zum Zwecke der Steuerung windempfindlicher Organe dieses Luftfahrzeugs, welche Vorrichtung umfaßt:
   – Mittel (11, 13), um zu jedem Zeitpunkt i einer Folge von über diese Zeitperiode verteilten Zeitpunkten den Wert $V_i$ des Absolutbetrags der Geschwindigkeit des Luftfahrzeugs relativ zur Luftmasse, in der es sich fortbewegt, und – in dem terrestrischen Bezugssystem – die Werte $S_{Ni}$, $S_{Ei}$ und $S_{Vi}$ der drei Komponenten der Geschwindigkeit des Luftfahrzeugs relativ zum Boden zu messen,
   – Mittel (12) zum Speichern dieser gemessenen Werte, und
   – Mittel (13), um mittels der Methode der kleinsten Fehlerquadrate ein Gleichungssystem mit drei unbekannten $W_N$, $W_E$ und $W_V$ zu lösen, ein System, dessen laufende Gleichung:
   $$2\,(S_{Ni} - S_{NR})\,W_N + 2\,(S_{Ei} - S_{ER})\,W_E + 2\,(S_{Vi} - S_{VR})\,W_V$$
   $$= S_{Ni}^2 - S_{NR}^2 + S_{Ei}^2 - S_{ER}^2 + S_{Vi}^2 - S_{VR}^2 + V_R^2 - V_i^2$$
   ist, wobei $V_R$, $S_{NR}$, $S_{ER}$ und $S_{VR}$ vor dem Zeitpunkt i in den genannten Speichermitteln (12) gespeicherte Werte des besagten Absolutbetrags bzw. der drei Komponenten der Geschwindigkeit des Luftfahrzeugs relativ zum Boden sind.

6. Vorrichtung zur Durchführung des Verfahrens nach Anspruch 2, ein Verfahren zur Bestimmung der drei Komponenten $W_N$, $W_E$ und $W_V$ der Windgeschwindigkeit relativ zum Boden in einem terrestrischen Bezugssystem im Verlauf einer Flugperiode eines Luftfahrzeugs zum Zwecke der Steuerung windempfindlicher Organe dieses Luftfahrzeugs, welche Vorrichtung umfaßt:
   – Mittel (11', 13'), um zu jedem Zeitpunkt i einer Folge von über diese Zeitperiode verteilten Zeitpunkten den Wert $V_i$ des Absolutbetrags der Geschwindigkeit des Luftfahrzeugs relativ zur Luftmasse, in der es sich fortbewegt, in dem terrestrischen Bezugssystem die Werte $S_{Ni}$, $S_{Ei}$ und $S_{Vi}$ der drei Komponenten der Geschwindigkeit des Luftfahrzeugs relativ zum Boden und den Wert $\vartheta_i$ des Längsneigungswinkels zu messen,
   – Mittel (12') zum Speichern dieser gemessenen Werte,
   – Mittel (13') zur Berechnung der vertikalen Komponente $W_V$ mit Hilfe der Formel:

$$W_V = (1/i) \sum_{k=1}^{i} S_{Vk} - V_k \sin \vartheta_k$$

   – und Mittel (13'), um mittels der Methode der kleinsten Fehlerquadrate das Gleichungssystem zu lösen, dessen zwei Unbekannte die zwei horizontalen Komponenten $W_N$ und $W_E$ sind, ein System, dessen laufende Gleichung:
   $$2\,(S_{Ni} - S_{NR})\,W_N + 2\,(S_{Ei} - S_{ER})\,W_E =$$
   $$S_{Ni}^2 - S_{NR}^2 + S_{Ei}^2 - S_{ER}^2 + S_R^2 \cos^2 \vartheta_R - V_i^2 \cos^2 \vartheta_i$$
   ist, wobei $V_R$, $S_{NR}$, $S_{ER}$ und $\vartheta_R$ vor dem Zeitpunkt i in den genannten Speichermitteln (12', 13') gespeicherte Werte des besagten Absolutbetrags, der drei Komponenten der Geschwindigkeit des Luftfahrzeugs relativ zum Boden bzw. des Längsneigungswinkels sind.

7. Vorrichtung nach einem der Ansprüche 5 oder 6, bei der die Folge von über die besagte Zeitperiode verteilten Zeitpunkten insgesamt n Zeitpunkte umfaßt, wobei n mindestens 3 ist, die Mittel zum Speichern (12, 13; 12', 13') die Werte speichern, welche zu jedem Zeitpunkt j (j kleiner als i) gemessen wurden, und die Mittel (13, 13') zur Lösung ein System von $n(n-1)/2$ Gleichungen lösen.

**8.** Vorrichtung nach einem der Ansprüche 5 oder 6, bei der die Speichermittel (12, 13; 12′, 13′) Mittelwerte einer Vielzahl von Werten, welche zu den Zeitpunkten j (j kleiner als i) gemessen wurden, speichern und die Mittel zur Lösung in Echtzeit ein System von (i−1) Gleichungen lösen.

**9.** Vorrichtung nach einem der Ansprüche 5 bis 8, bei der die Mittel (11, 13) zur Messung ein Pitotrohr umfassen, das nur dann ein gültiges Ergebnis für den Wert $V_i$ des Absolutbetrags der Geschwindigkeit des Luftfahrzeugs relativ zur Luft liefert, wenn dieser Absolutbetrag größer ist als ein bestimmter Schwellenwert, und bei der, wenn dieser Absolutbetrag kleiner wird als der Schwellenwert, die letzten in gültiger Weise ermittelten Komponenten $W_N$, $W_E$ und $W_V$ der Windgeschwindigkeit gespeichert werden, um mit den gemessenen Werten $S_{Ni}$, $S_{Ei}$ und $S_{Vi}$ der drei Komponenten der Geschwindigkeit des Luftfahrzeugs relativ zum Boden zusammengesetzt zu werden, um die Geschwindigkeit des Luftfahrzeugs relativ zur Luft zu berechnen.

## Claims

**1.** A method for providing the three components $W_N$, $W_E$ and $W_V$, in an Earth reference frame, of speed with respect to the ground of the mean wind during a flight period of an aircraft, for controlling wind sensitive equipments of said aircraft, comprising :

   – measuring at each time of rank i of a succession of times distributed over said period a value $V_i$ of the modulus of the speed of said aircraft with respect to the air mass in which it moves and the values $S_{Ni}$, $S_{Ei}$ and $S_{Vi}$ of the three components, in said Earth reference frame, of the ground speed of said aircraft ;

   – storing said measured values ; and

   – solving, using the method of least squares, a system of equations with three unknowns $W_N$, $W_E$, $W_V$ in which system a current equation is

   $$2(S_{Ni} - S_{NR}) W_N + 2(S_{Ei} - S_{ER}) W_E + 2(S_{Vi} - S_{VR}) W_V$$
   $$= S_{Ni}^2 - S_{NR}^2 + S_{Ei}^2 - S_{ER}^2 + S_{Vi}^2 - S_{VR}^2 + V_R^2 - V_i^2$$

   $V_R$, $S_{NR}$, $S_{ER}$ and $S_{VR}$ being values, stored before the time of rank i, of said modulus and of said three components of the ground speed of said aircraft, respectively.

**2.** A method for providing the three components $W_N$, $W_E$, and $W_V$, in an Earth reference frame, of speed with respect to the ground of the mean wind during a flight period of an aircraft, for controlling wind sensitive equipments of said aircraft, comprising :

   – measuring at each time of rank i of a succession of times distributed over said period, a value $V_i$ of the modulus of the speed of said aircraft with respect to the air mass in which it moves, the values $S_{Ni}$, $S_{Ei}$ and $S_{Vi}$ of the three components, in said Earth reference frame, of the ground speed of said aircraft, and a value $\theta_i$ of the pitch angle ;

   – storing said measured values,

   – solving the vertical component $W_V$ from the formula :

   $$W_V = (1/i) \sum_{k=1}^{i} S_{Vk} - V_k \sin \theta_k$$

   – solving, using the method of least squares, a system of equations the two unknowns of which are both horizontal components $W_N$ and $W_E$, in which system a current equation is

   $$2 (S_{Ni} - S_{NR}) W_N + 2 (S_{Ei} - S_{ER}) W_E =$$
   $$S_{Ni}^2 - S_{NR}^2 + S_{Ei}^2 - S_{ER}^2 + V_R^2 \cos^2 \theta_R - V_i^2 \cos^2 \theta_i$$

   $V_R$, $S_{NR}$, $S_{ER}$, $S_{VR}$ and $\theta_r$ being values, stored before the time of rank i, of said modulus, of said two horizontal components of the ground speed of said aircraft and of said pitch angle, respectively.

**3.** The method as claimed in claim 1 or 2, wherein said succession of times distributed over said period comprises in all n times, n being at least equal to 3, said values stored before the time of rank i are those measured at any time of rank j, less than i, and a system of n(n−1)/2 equations is solved.

4. The method as claimed in claim 1 or 2, wherein said values stored before the time of rank i are averages of a plurality of values measured at times of rank j, less than i, and a system of (i−1) equations is solved in real time.

5. A device for implementing the method of claim 1 for providing the three components $W_N$, $W_E$ and $W_V$, in an Earth reference frame, of speed with respect to the ground of the wind during a flight period of an aircraft, for use by equipments of said aircraft which are sensitive to the wind, comprising :

– means (11,13) for measuring, at each time of rank i of a succession of times distributed over said flight period, a value $V_i$ of the modulus of the speed of said aircraft with respect to the air mass in which it moves, and values $S_{Ni}$, $S_{Ei}$, $S_{Vi}$ of the three components, in said Earth reference frame, of the ground speed of said aircraft,

– storing means (12) for storing said measured values ; and

– means (13) for solving, using the method of least squares, a system of equations with three unknowns $W_N$, $W_E$, and $W_V$, in which system a current equation is

$$2(S_{Ni} - S_{NR}) W_N + 2 (S_{Ei} - S_{ER}) W_E + 2 (S_{Vi} - S_{VR}) W_V$$
$$= S_{Ni}^2 - S_{NR}^2 + S_{Ei}^2 - S_{ER}^2 + S_{Vi}^2 - S_{VR}^2 + V_R^2 - V_i^2$$

$V_R$, $S_{NR}$, $S_{ER}$ and $S_{VR}$ being values, stored before the time of rank i in said storing means (12) of said modulus and of said three components of the ground speed of said aircraft, respectively.

6. Device for implementing the method of claim 2 for providing the three components $W_N$, $W_E$, $W_V$ in an Earth reference frame, of speed with respect to the ground of the mean wind during a flight period of an aircraft, for use by equipment of said aircraft which is sensitive to the wind, comprising :

– means (11′,13′) for measuring, at each time of rank i of a succession of times distributed over said flight period, a value $V_i$ of the modulus of the speed of said aircraft with respect to the air mass in which it moves, values $S_{Ni}$, $S_{Ei}$, $S_{Vi}$ of the three components, in said Earth reference frame, of the ground speed of said aircraft and the value $\theta_i$ of the pitch angle,

– storing means (12′) for storing said measured values ;

– means (13′) for computing the vertical component $W_V$ from the formula :

$$W_V = (1/i) \sum_{k=1}^{i} S_{Vk} - V_k \sin \theta_k$$

– and means (13′) for solving, using the method of least squares, the system of equations in which the two unknowns are the two horizontal components $W_N$ and $W_E$, in which system a current equation is :

$$2(S_{Ni} - S_{NR}) W_N + 2 (S_{Ei} - S_{ER}) W_E =$$
$$S_{Ni}^2 - S_{NR}^2 + S_{Ei}^2 - S_{ER}^2 + S_R^2 \cos^2 \vartheta_R - V_i^2 \cos^2 \vartheta_i$$

$V_R$, $S_{NR}$, $S_{ER}$ and $\theta_R$ being values, stored before the time of rank i in said storing means (12′,13′), of said modulus, of said three components of the ground speed of said aircraft and of said pitch angle, respectively.

7. Device as claimed in claim 5 or 6, wherein said succession of times distributed over said period comprises in all n times, n being at least equal to 3, said storing means (12,13;12′,13′) stores the values measured at any time of rank j, less than 1, and said solving means (13,13′) solves a system of n(n−1)/2 equations.

8. Device as claimed in claim 5 or 6, wherein said storing means (12,13;12′,13′) stores averages of a plurality of values measured at times of rank j, less than i, and said solving means solves a system of (i−1) equations in real time.

9. The device as claimed in any of claims 5 to 8, wherein said measuring means (11,13) comprise a Pitot tube which delivers a valid result for said value $V_1$ of the modulus of the speed of said aircraft with respect to the air only when said modulus is greater than a given threshold and wherein, when said modulus becomes less than said given threshold, the last validly determined components $W_N$, $W_E$ and $W_V$ of the speed of the wind are stored so as to be composed with said measured values $S_{Ni}$, $S_{Ei}$ and $S_{Vi}$ of the three components of the ground speed of said aircraft for estimating the speed of said aircraft with respect to the air.

FIG.1

$W_N$

N

$W_E$

$W_V$

$W$

E

V

X

V

Y

S

Z

0

1

$V_R, S_{NR}, S_{ER}, S_{VR}$

12

11

$V_i, S_{Ni}, S_{Ei}, S_{Vi}$

13

$W_N, W_E, W_V$

T

FIG.2

FIG.3